# EUROPEAN PATENT SPECIFICATION

(11) **EP 0 762 423 B1**
(45) Date of publication and mention of the grant of the patent: **11.04.2007**
(21) Application number: 96108363.1
(22) Date of filing: 25.05.1996
(51) Int. Cl.: G11B 27/30, G11B 20/14, G11B 20/18, G11B 20/12, H04N 5/926, H04N 5/7826

(54) **Sync detecting and protecting circuit and method thereof**
Sync-Detektions- und Schutzschaltung und Verfahren dafür
Circuit de détection et de protection de sync et méthode associée

(30) Priority: 06.09.1995 KR 9529164
(43) Date of publication of application: 12.03.1997
(73) Proprietor: SAMSUNG ELECTRONICS CO., LTD., Suwon City, Kyungki-do (KR)
(72) Inventor: Kim, Yong-je, Kunpo-city, Kyungki-do (KR)
(74) Representative: Robinson, Ian Michael

(56) References cited:
- EP-A- 0 294 841
- EP-A- 0 367 217
- EP-A- 0 473 412
- EP-A- 0 617 423
- EP-A- 0 646 922
- DE-A- 3 718 566
- US-A- 4 525 840
- US-A- 4 747 116
- PATENT ABSTRACTS OF JAPAN vol. 17, no. 491 (P-1607), 6 September 1993 & JP-A-05 120810 (SONY CORP.), 18 May 1993,
- PATENT ABSTRACTS OF JAPAN vol. 12, no. 90 (P-679), 24 March 1988 & JP-A-62 223857 (VICTOR CO. OF JAPAN, LTD.), 1 October 1987,

## Description

The present invention relates to a sync detecting and protecting circuit and a method thereof, and more particularly, to a sync detecting and protecting circuit and a method thereof for accurately detecting the data at a predetermined position in a digital VCR by accurately detecting a sync and generating a pseudo-sync control signal when an error is found in the sync.

A standard definition (SD) video cassette recorder (VCR) in which standard-definition NTSC and PAL signals are recorded/reproduced using digital video tape has been developed and, accordingly, an SD signal recording format has been established. Currently, under development are advanced-television (ATV) and digital video broadcast (DVB) VCRs for recording/reproducing ATV and DVB signals using digital video tape. In both the ATV-VCR and the DVB-VCR, the signals are recorded on digital video tape in the SD recording format.

The track and data sector structures of the SD-format digital video tape used in a digital video cassette recorder will be described.

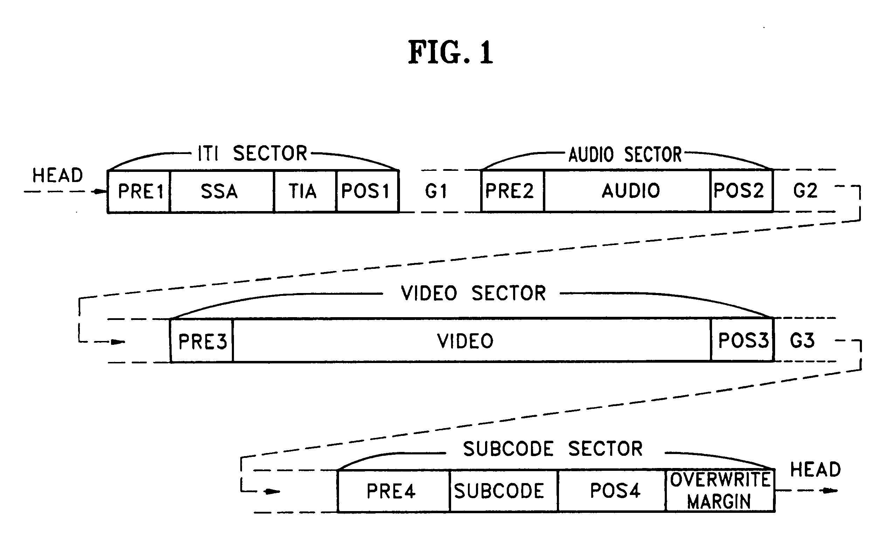

Figure 1 illustrates an arrangement of sectors on a helical track of the digital video tape having the SD recording format.

On the track, an insert and track information (ITI) sector, an audio sector, a video sector and a subcode sector are arranged in order from the start of the track where a head begins to scan. Data location on the track is as follows.

The ITI sector consists of a 1,400-bit ITI preamble area (PRE1), a 1,830-bit start sync block area (SSA), a 90-bit track information area (TIA), and a 280-bit ITI post-amble area (POS1).

The audio sector consists of an audio pre-amble area (PRE2) having 400-bit run-up data and 2 pre-sync blocks, an audio data area (AUDIO) including 14 data sync blocks, and a 550-bit audio post-amble area (POS2) having a post-sync block and a 500-bit guard area.

The video sector consists of a video pre-amble area (PRE3) having 400-bit run-up data and 2 pre-sync blocks, a video data area (VIDEO) having 149 data sync blocks, and a 975-bit video post-amble area (POS3) having a post-sync block and a 925-bit guard area.

The subcode sector consists of a 1,200-bit subcode pre-amble area (PRE4), a 1,200-bit subcode area (SUBCODE), and a subcode post-amble area (POS4) having 1,200 bits for a 625 line/50 field system but 1,325 bits for a 525 line/60 field system. A 1,250-bit overwrite margin area follows after POS4 of the subcode sector.

A data sync block for the audio and video sectors has 750 bits. Each of edit gaps G1, G2, and G3 exists between sectors: G1, G2 and G3 have 625 bits, 700 bits, and 1,550 bits, respectively.

The structure of the video sector in the track shown in Figure 1 will be described in more detail.

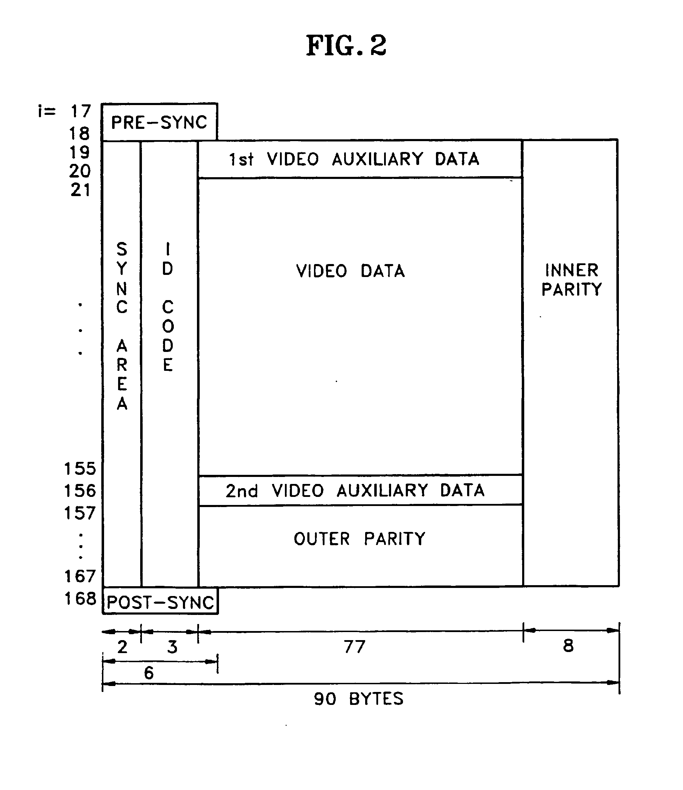

Figure 2 illustrates the pre-sync block, video data area, and post-sync block of the video sector.

Referring to Figure 2, the video data area is constituted of sync blocks 19 and 20 for first video auxiliary data, sync blocks 21-155 for video data, a sync block 156 for second video auxiliary data, and sync blocks 157-167 for an outer parity. Each sync block has a 2-byte sync, a 3-byte identification (ID) code, 77-byte data, and an 8-byte inner parity.

Sync blocks 17 and 18 are pre-sync blocks of PRE3 and a sync block 168 is a post-sync block of POS3.

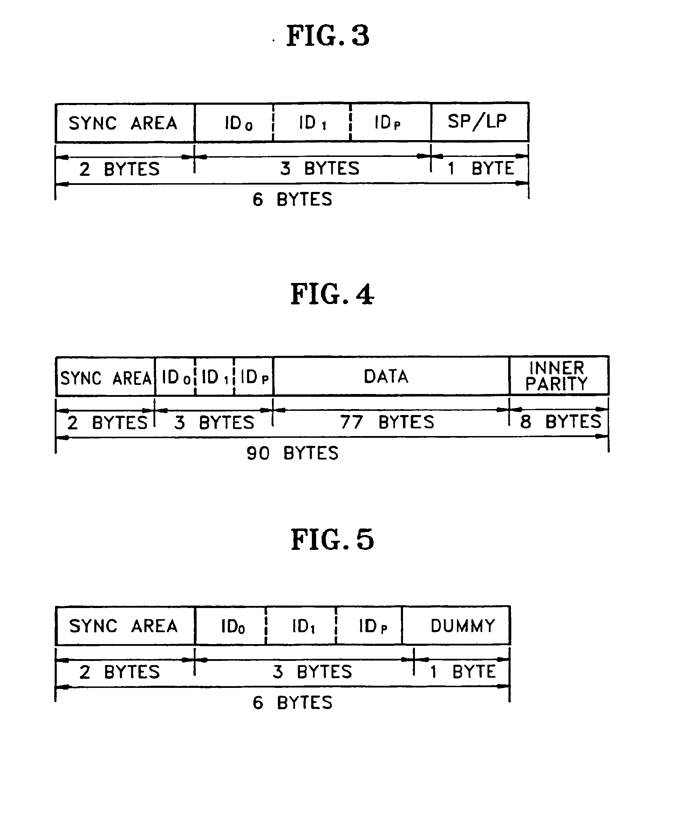

Figure 3 illustrates the structure of a pre-sync block shown in Figure 2.

Referring to Figure 3, each of the two pre-sync blocks shown in Figure 2 has a 2-byte sync, a 3-byte ID code, a 1-byte SP/LP code in order. SP/LP=FFₕ is assigned to the SP mode and SP/LP=00ₕ is assigned to the LP mode. ID₀ of the ID code (ID₀, ID₁ and IDₚ) indicates track pair information and application information, ID₁ indicates a sync block number, and IDₚ is a 1-byte error correction ID parity for ID₀ and ID₁.

Figure 4 illustrates the structure of a data sync block shown in Figure 2.

Referring to Figure 4, the data sync block is constituted of a 2-byte sync, a 3-byte ID code, 77-byte data, and an 8-byte inner code-error correction inner parity. ID₀ of the 3-byte ID code (ID₀, ID₁ and IDₚ) indicates a sequence number and track pair information for sync blocks 19-156 and track pair information and application information for sync blocks 157-168, ID₁ indicates a sync block number, and IDₚ is an error correction ID parity for ID₀ and ID₁.

Figure 5 illustrates the structure of a post-sync block shown in Figure 2.

Referring to Figure 5, the post-sync block is constituted of a 2-byte sync, a 3-byte ID code, and a 1-byte dummy data. The dummy data is always FFₕ. ID₀ of the ID code (ID₀, ID₁ and IDₚ) indicates track pair information and application information, ID₁ indicates a sync block number, and IDₚ indicates an error correction ID parity for ID₀ and ID₁.

The pre-sync block and post-sync block shown in FIGs. 3 and 5 have a common form for the audio and video sectors.

In a digital VCR having the above-described recording format, a sync must be accurately detected during playback in order to accurately detect the data of each area which has been recorded in a predetermined position.

Either of sync patterns SYNC-D and SYNC-E, as below, is recorded in the sync areas of the pre-sync block of PRE2, the data sync block of AUDIO, and the post-sync block of POS2 in the audio sector, and in the sync areas of the pre-sync block of PRE3, the data sync block of VIDEO, and the pre-sync block of POS3 in the video sector, shown in Figure 1.
SYNC-D: 0 0 1 1 1 1 1 1 1 1 1 1 0 0 0 1
SYNC-E: 1 1 1 0 0 0 0 0 0 0 0 0 0 1 1 1 0

Either of sync patterns SYNC-F and SYNC-G, as below, is recorded in the sync areas of the subcode sync block of the subcode sector shown in Figure 1.
SYNC-F: 0 0 0 0 0 1 1 1 1 1 1 1 1 1 1 0 1
SYNC-G: 1 1 1 1 1 0 0 0 0 0 0 0 0 0 0 1 0

Either of run-up patterns RUN-A and RUN-B, as below, is recorded in edit gap G1 between the ITI sector and the audio sector, edit gap G2 between the audio sector and the video sector, edit gap G3 between the video sector and the subcode sector, the run-up area of the pre-amble in each sector and the guard area of the post-amble in each sector.
RUN-A: 0 0 0 1 1 1 0 0 0 1 1 1 0 0 0 0 0 1 1 1 0 0 011
RUN-B: 1 1 1 0 0 0 1 1 1 0 0 0 1 1 1 1 1 0 0 0 1 1 1 0 0

In the reproducing apparatus of a conventional digital VCR, a sync protection circuit is provided since an accurate data detection is difficult when a sync has an error.

Meanwhile, in a sync detection circuit (U.S. Patent No. 4,747,116), a sync indication signal is detected by comparing a predetermined sync pattern with a sync pattern of an input digital signal, the errors of the input digital sync are detected, the detected sync indication signal is output if the number of the errors is a predetermined value or below, and the outputting of the detected sync indication signal is prevented if the number exceeds the predetermined value.

In a sync detection circuit for a rotating-head digital audio tape recorder (U.S. Patent No. 5,228,041), a sync of serial digital data having an error detection code generated by a predetermined computation is compared with a predetermined sync pattern during each block period by using an auxiliary code and an address code indicating the address value of the block period. A sync detection signal is generated if the sync is identical with the sync pattern, and an error detection signal is detected through a predetermined computation by using the auxiliary code, the address code, and the error detection code. The sync detection signal is output only if no error is found in the error detection signal.

However, the above-described sync detection circuits cannot be applied to a digital VCR having the SD signal recording format and do not have the function of generating a pseudo-sync control signal, which is suggested in the present invention, when there is an error in a sync.

EP-A-0 473 412 (Matsushita Electrical Industrial Co. Ltd) describes a digital signal recording method in which two different kinds of synchronous pattern provided for video and audio data, respectively, are used to allow a decision between video data and audio data to be made more accurately.

It is an aim of preferred embodiments of the present invention to provide a sync detecting and protecting circuit for accurately detecting the data recorded in a predetermined area of each track by detecting a sync and generating a pseudo-sync control signal when an error is found in the sync.

It is another aim of preferred embodiments of the present invention to provide a sync detecting and protecting method for accurately detecting the data recorded in a predetermined area of each track by detecting a sync and generating a pseudo-sync control signal when an error is found in the sync.

According to a first aspect of the present invention, there is provided a sync detecting and protecting circuit for use in a reproducing apparatus for reproducing digital data from a recording medium wherein a predetermined plurality of areas for recording said digital data are arranged in each track, each area is constituted of a plurality of sync blocks, a predetermined pre-amble pattern is recorded at the start of each area, different types of areas having a predetermined preamble pattern according to a type of area, said sync detecting and protecting circuit comprising: first detecting means for detecting a pre-amble pattern of said digital data received from the recording medium; second detecting means for detecting a sync of said received digital data, comparing said detected sync and a predetermined sync pattern, and outputting a sync detection signal; characterised by: the first detecting means generating a corresponding area signal indicating the type of area according to the detected preamble pattern; the second detecting means for generating the predetermined sync pattern according to the area signal output by the first detecting means; and control signal generating means for generating a sync control signal on the basis of said sync detection signal, and generating a pseudo-sync control signal if said detected sync has an error.

Preferably, the circuit further comprises ID separating means for separating the ID code recorded after said detected sync, comparing said separated ID with the IDs of the previous track and sync block, and outputting an ID comparison signal.

Preferably, said control signal generating means generates a sync control signal on the basis of said sync detection signal and said ID comparison signal.

Said control signal generating means may generate a sync and ID area signal on the basis of said sync detection signal.

The circuit may further comprise data selecting means for removing the sync and ID of the digital data output through said first detecting means according to said sync and ID area signal, and outputting said sync-and-ID-removed digital data; and delaying means for delaying the digital data output from said first detecting means by the time for generating said sync and ID area signal in said control signal generating means, and outputting said delayed data to said data selecting means.

Said first detecting means preferably comprises a preamble comparing circuit for comparing a predetermined preamble pattern with a first pre-amble of said input digital data in response to a head switching signal indicating the start of a track, and outputting a first comparing signal; a run-up pattern comparing circuit for comparing a predetermined run-up pattern and the run-up pattern of the digital data output through said pre-amble comparing circuit in response to said first comparing signal, and outputting a second comparing signal; and an area signal generator for generating a plurality of area signals corresponding to said plurality of areas on the basis of said first and second comparing signals.

Said second detecting means may comprise a sync pattern generator for generating the sync patterns for a predetermined plurality of areas according to said plurality of area signals; and a sync pattern comparing circuit for comparing the sync pattern of said input digital data and said generated sync pattern and outputting a sync detection signal.

Said second detecting means may further comprise a delay for delaying said input digital data by the time for generating each of said plurality of area signals and outputting said delayed digital data to said sync pattern comparing circuit.

Preferably, said ID separating means comprises an ID detector for detecting an ID from the digital data output through said sync pattern comparing circuit in response to said sync selecting signal; a memory for storing an ID indicating the track pair information of a previous track and an ID indicating the number of a previous sync block; and an error corrector for correcting the errors of said detected ID and outputting an error-corrected ID to said memory; and an ID comparing circuit for comparing said error-corrected ID with said ID indicating the track pair information of the previous track in response to said head switching signal, comparing said current error-corrected ID with said ID of the previous sync block, and outputting an ID comparing signal.

Said control signal generating means may output a previous sync control signal as a pseudo sync control signal when only said ID comparing signal is detected without said sync detection signal, and prevent the outputting of said sync control signal when said sync detection signal is not detected successively.

According to a second aspect of the invention, there is provided a sync detecting and protecting circuit in a reproducing apparatus of a digital video cassette recorder including demodulating means for reproducing and demodulating data recorded in a predetermined plurality of areas on a digital tape having an SD recording format, error correction decoding means for error-correction decoding the data output from said demodulating means, and data expanding means for expanding said error-correction decoded data, said sync detecting and protecting circuit comprising: run-up pattern detecting means for detecting a run-up pattern of the digital data output from said demodulating means; and sync pattern detecting means for detecting a sync from said data demodulated in said demodulating means, comparing said detected sync with a predetermined sync pattern, and outputting a sync detection signal; characterised by: the run-up pattern detecting means generating a corresponding area signal according to the detected run-up pattern; the sync pattern generating means generating the predetermined sync pattern according to the area signal; ID separating means for separating an ID following said sync detected in said sync pattern detecting means, comparing said separated ID with the Ids of the previous track and sync block, and outputting an ID comparing signal; pseudo-sync control signal generating means for outputting a sync control signal on the basis of said sync detection signal and said ID comparing signal, generating a pseudo-sync control signal if an error takes place in said detected sync, and generating a sync and ID area signal on the basis of said sync detection signal; and data selecting means for removing the sync and ID of the digital data output through said run-up pattern detecting means according to said sync and ID area signal, and outputting said sync-and-ID-removed data to said error correction decoding means.

Preferably, the circuit further comprises delaying means for delaying the data output from said run-up pattern detecting means by the time for generating said sync and ID area signal, and outputting said delayed data to said data selecting means.

Said run-up pattern detecting means preferably comprises a pre-amble comparing circuit for comparing a predetermined pre-amble pattern with a first pre-amble of the digital data output from said demodulating means in response to a head switching signal indicating the start of a track, and outputting a first comparing signal; a run-up pattern comparing circuit for comparing a predetermined run-up pattern with a run-up of the digital data output from said pre-amble comparing circuit in response to said first comparing signal, and outputting a second comparing signal; and a control signal and area signal generator for generating a first enable signal for enabling said pre-amble comparing circuit in response to said head switching signal, generating a second enable signal for enabling said run-up pattern comparing circuit in response to said first enable signal, and generating a plurality of area signals corresponding to said plurality of areas.

Preferably, said sync pattern detecting means comprises a sync pattern generator for generating the sync patterns of a predetermined plurality of areas according to said plurality of area signals; and a sync pattern comparing circuit for comparing the sync of the digital data output from said demodulating means with said generated sync pattern, and outputting a sync detection signal.

Said sync pattern detecting means may further comprise a delay for delaying the digital data output from said demodulating means by the time for generating each of said plurality of area signals.

Preferably, said ID separating means comprises an ID detector for detecting an ID from the digital data output through said sync pattern comparing circuit; a memory for storing an ID indicating the track pair information of the previous track and an ID indicating the number of the previous sync block; an ID error corrector for correcting the errors of said detected ID and outputting an error-corrected ID to said memory; and an ID comparing circuit for comparing said ID indicating the track pair information of the previous track with said error-corrected ID in response to said head switching signal, comparing said Id of the previous sync block with said error-corrected ID in response to said sync detection signal, and outputting an ID comparing signal.

Preferably, said pseudo-sync control signal generating means outputs the previous sync control signal as a pseudo-sync control signal when only said ID comparing signal is detected without said sync detection signal, and prevents the outputting of said sync detection signal when said sync detection signal is not detected successively.

According to a third aspect of the present invention, there is provided a sync detecting and protecting method for use in a reproducing apparatus for reproducing digital data from a recording medium in which a predetermined plurality of areas for recording the digital data are arranged in each track, each area is constituted of a plurality of sync blocks, a predetermined pre-amble pattern is recorded at the start of each area, the sync detecting and protecting method comprising the steps of: (a) detecting a pre-amble pattern of the digital data received from the recording medium; (b) detecting a sync of the received digital data, comparing the detected sync with a predetermined sync pattern, and generating a sync detection signal; and characterised by: the generation of a corresponding area signal according to the pre-amble pattern detected in step (a); the generation of the predetermined sync signal of step (b) according to the area signal; and the step of: (c) generating a sync control signal on the basis of the sync detection signal, and generating a pseudo-sync control signal if an error is found in the detected sync.

Preferably, the method further comprises the step of separating the ID code following said sync detected in step (b), comparing said separated ID with the IDs of the previous track and sync block, and generating an ID comparison signal.

Preferably, a sync control signal is generated on the basis of said sync detection signal and said ID comparison signal, in said step (c).

For a better understanding of the invention, and to show how embodiments of the same may be carried into effect, reference will now be made, by way of example, to the accompanying diagrammatic drawings, in which:
Figure 1 illustrates an arrangement of sectors on a helical track of a tape in a digital VCR;
Figure 2 illustrates the structure of the video sector shown in Figure 1;
Figure 3 illustrates the structure of a pre-sync block shown in Figure 2;
Figure 4 illustrates the structure of a data-sync block shown in Figure 2;
Figure 5 illustrates the structure of a post-sync block shown in Figure 2;
Figure 6 is a block diagram of a reproducing apparatus of a digital VCR to which the present invention is applied;
Figure 7 is a block diagram of a sync detecting and protecting circuit according to an embodiment of the present invention;
Figure 8 is a block diagram of the run-up pattern detector shown in Figure 7;
Figure 9 is a block diagram of the sync pattern detector shown in Figure 8; and
Figure 10 is a block diagram of the ID separator shown in Figure 7.

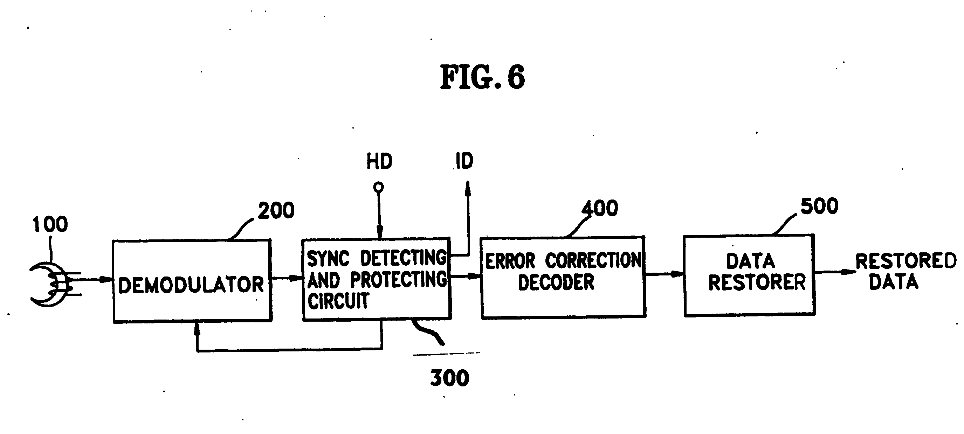

Referring to Figure 6, a signal reproduced by a head 100 is input to a demodulator 200. In demodulator 200, reproduced 25-bit data is demodulated to 24-bit data. Here, 24-to-25 modulation is performed during recording. The 24-to-25 modulation indicates that "0" bit or "1" bit is prefixed to 24-bit data, thereby obtaining a 25-bit channel word of an intended frequency spectrum.

As shown in the track structure of Figure 1, head 100 reads data recorded in a track from PRE1 to POS4 in order. To accurately read the data in each area, a sync must be accurately detected.

Therefore, a sync detecting and protecting circuit 300 detects a sync from the data demodulated in demodulator 200, compares the pattern of the detected sync with a predetermined sync pattern, outputs a sync control signal to demodulator 200 if they are identical, generates a pseudo-sync control signal if an error is found in the detected sync pattern, and outputs the pseudo-sync control signal to demodulator 200.

An error correction decoder 400 error-correction decodes the data coded in the form of a product code, i.e., a Read-Solomon (R-S) code, which is output from sync detecting and protecting circuit 300, by using an inner parity and an outer parity.

A data restorer 500 variable-length-decodes the error-correction decoded data, inverse-quantizes the variable-length-decoded data, and restores the inverse-quantized data to the original data, through an inverse discrete cosine transform operation, by utilizing the quantization step size used during encoding.

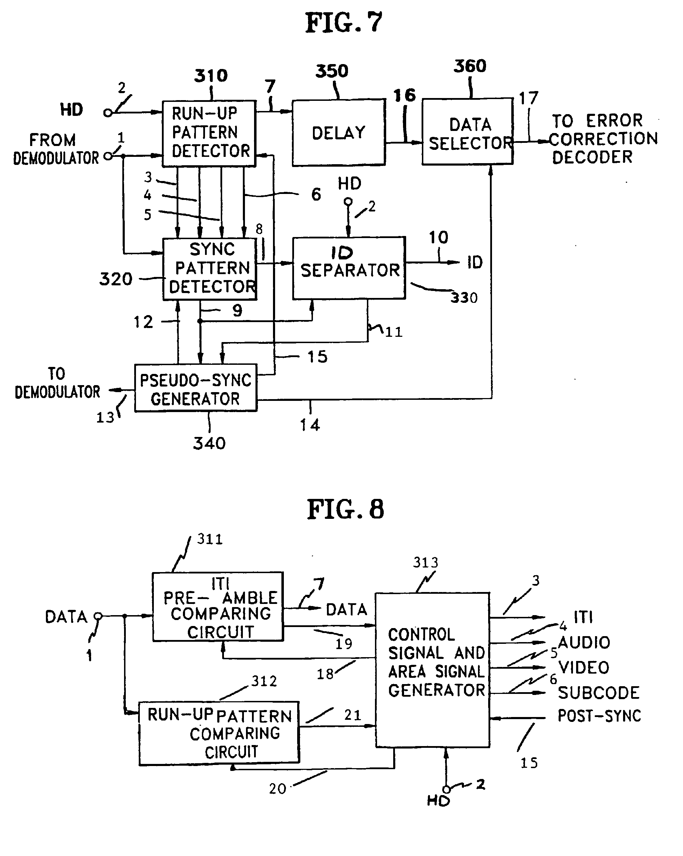

Figure 7 is a block diagram of a sync detecting and protecting circuit according to an embodiment of the present invention.

Referring to Figure 7, the demodulated data output from an output port 1 of demodulator 200 shown in Figure 6 is input to a run-up pattern detector 310 and a sync pattern detector 320.

Run-up pattern detector 310 detects the run-up pattern of each pre-amble area of the received data and outputs respective area signals corresponding to an ITI area, an audio area, a video area and a subcode area through output ports 3, 4, 5 and 6, respectively.

Sync pattern detector 320 compares a predetermined sync pattern with a sync pattern of the demodulated data received through input port 1 of demodulator 200, according to each area signal output from output ports 3, 4, 5 and 6, generates a sync detection signal, outputs the sync detection signal to an ID separator 330 and a pseudo-sync control signal generator 340, and inputs the demodulated data to ID separator 330.

ID separator 330 separates an ID from the data output from an output port 8 of sync pattern detector 320, according to a head switching signal HD received from an input port 2 and the sync detection signal output from an output port 9 of sync pattern detector 320, outputs the ID through an output port 10, compares the pre-stored ID with the current ID, and outputs an ID comparison signal through an output port 11 to pseudo-sync control signal generator 340.

Pseudo-sync control signal generator 340 outputs a sync stand-by signal through an output port 12 to sync pattern detector 320 if the sync detection signal is received through output port 9 of sync pattern detector 320, and outputs a sync control signal to demodulator 200 through an output port 13 if a sync detection signal generated during a sync stand-by period and the ID comparison signal output from output port 11 are received. Here, even though only the ID comparison signal is detected without the sync detection signal, the sync control signal is output through output port 13 to demodulator 200. Here, the sync control signal acts as a pseudo-sync control signal. Further, the sync control signal is output to demodulator 200, whenever a sync detection signal for a data sync block is detected after the detecting of a sync detection signal for a pre-sync block.

Meanwhile, pseudo-sync control signal generator 340 generates a sync and ID area signal whenever the sync control signal is output to demodulator 200, outputs the sync and ID area signal through an output port 14 to a data selector 360, and outputs a post-sync detection signal through an output port 15 to run-up pattern detector 310, if the sync detection signal detected during the sync stand-by period is for the post-sync of each sector, thereby to control run-up pattern detector 310 to generate the following area signal.

A delay 350 delays the data demodulated in demodulator 200 which is output from output port 7 of run-up pattern detector 310 during the signal processing period until the sync and ID area signal is generated, and outputs the delayed data through output port 16 to data selector 360.

Data selector 360 outputs the data output through output port 16 as data from which the sync and the ID are removed, according to the sync and ID area signal output through output port 14 of pseudo-sync control signal generator 340, to an error correction decoder 400.

The operation of the circuit shown in Figure 7 will be described in detail, in connection with Figures 8-10.

Figure 8 is a detailed block diagram of run-up pattern detector 310 shown in Figure 7.

Referring to Figure 8, the demodulated data output from output port 1 is input to an ITI pre-amble comparing circuit 311 and a run-up pattern comparing circuit 312.

When a control signal and area signal generator 313 receives from input port 2 head switching signal HD indicative of the start of the play-back of each track, a first enable signal is output through a first enable port 18 to ITI pre-amble circuit 311, thereby turning ITI pre-amble comparing circuit 311 on.

ITI pre-amble comparing circuit 311 having preamble patterns built therein compares a built-in preamble pattern with a pre-amble pattern of the data received through input port 1, and outputs a first comparing signal as a "high" signal through an output port 19 to control signal and area signal generator 313. Control signal and area signal generator 313 outputs an area signal ITI indicating an ITI area through output port 3.

When ITI pre-amble comparing circuit 311 detects an ITI post-amble, the first comparing signal is output as a "low" signal to control signal and area signal generator 313. Then, control signal and area signal generator 313 outputs a second enable signal through a second enable port 20 to a run-up pattern comparing circuit 312, thereby turning run-up pattern comparing circuit 312 on.

Run-up pattern comparing circuit 312 having run-up patterns RUN-A and RUN-B built therein, compares a built-in run-up pattern with a run-up pattern of the demodulated data received from input port 1, outputs a second comparing signal as a "high" signal through an output port 21 to control signal and area signal generator 313 if they are identical, outputs the second comparing signal as a "low" signal to control signal and area signal generator 313 if a post-sync detection signal of an audio sector is input through output port 15 to pseudo-sync control signal generator 340 shown in Figure 7, a predetermined time later.

With the repetition of the procedure, the second comparing signal alternates between "high" and "low" three times in a track.

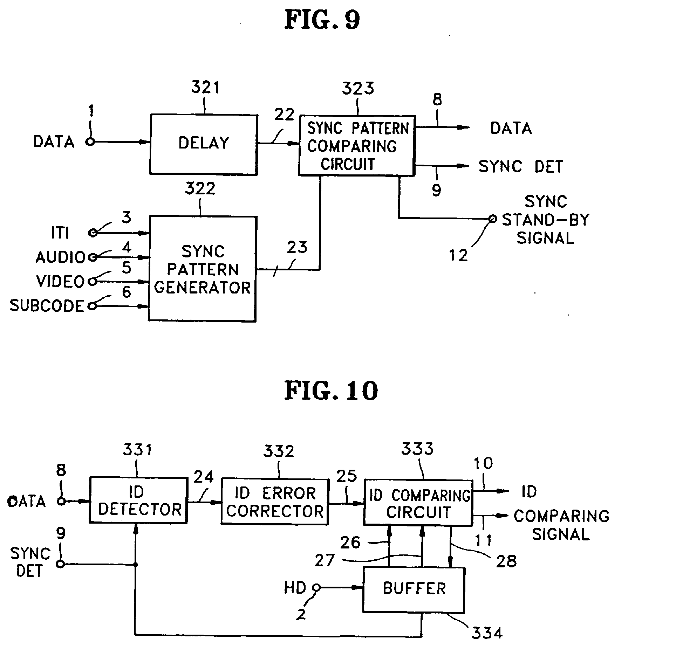

That is, in control signal and area signal generator 313, if the second comparing signal at the first logic high level is received through output port 21 of run-up pattern comparing circuit 312, an area signal AUDIO indicative of an audio area is output through output port 4, if the second comparing signal at the second logic high level is received, an area signal VIDEO indicative of a video area is output through output port 5, and if the second comparing signal at the third logic high level is received, an area signal SUBCODE indicative of a subcode area is output through output port 6. Output ports 3, 4, 5 and 6 are coupled to a sync pattern generator 322 of sync pattern detector 320 shown in Figure 9. Here, the output data of the ITI pre-amble comparing circuit 311 is output to the delay 350 of Figure 7 through an output port 7.

Figure 9 is a detailed block diagram of sync pattern detector 320 shown in Figure 7.

Referring to Figure 9, sync pattern generator 322 has the sync pattern of each area built therein, and outputs a corresponding sync pattern, according to each area signal output from output ports 3, 4, 5 and 6 of control signal and area signal generator 313, through an output port 23 to a sync pattern comparing circuit 323.

As described above, sync pattern generator 322 generates sync patterns SYNC-D and SYNC-E, if area signals received from output ports 3, 4, 5 and 6 indicate the audio and video areas, and generates sync patterns SYNC-F and SYNC-G, if an area signal received from output ports 3, 4, 5 and 6 indicates the subcode area.

A delay 321 delays the demodulated data received from input port 1 by a predetermined time in order to compensate the time for generating an area signal in run-up pattern detector 310, and outputs the delayed data through an output port 22 to sync pattern comparing circuit 323.

Accordingly, in sync pattern comparing circuit 323, the data received from delay 321 is output through an output port 8, the sync pattern of the input data is compared with the sync pattern generated in sync pattern generator 322 during the enable period of the sync stand-by signal output through output port 12 of pseudo-sync control signal generator 340, and if they are identical, a sync detection signal is output through output port 9 to pseudo-sync control signal generator 340 shown in Figure 7 and an ID detector 331 and a buffer 334 of ID separator 330 shown in Figure 10.

Here, the data output from output port 8 of sync pattern comparing circuit 323 is delayed by the time for generating a sync detection signal, in a delay (not shown) of sync pattern comparing circuit 323, and then output to ID detector 331 shown in Figure 10.

Figure 10 is a detailed block diagram of ID separator 330 shown in Figure 7.

Referring to Figure 10, ID detector 331 detects a 3-byte ID from the data output from output port 8 of sync pattern comparing circuit 323 shown in Figure 9.

An ID error corrector 332 corrects the errors of 2-byte ID (ID₀ and ID₁) of the 3-byte ID with the other 1-byte ID parity (IDₚ), and outputs the error-corrected 2-byte ID (ID₀ and ID₁) through an output port 25 to an ID comparing circuit 333.

ID comparing circuit 333 outputs the error-corrected 2-byte ID (ID₀ and ID₁) through an output port 10 to be used for system control.

In addition, ID comparing circuit 333 determines the congruity and continuity between the current ID₀ and ID₁ output from ID error corrector 332 and ID₀ and ID₁ output from buffer 334 where the ID₀ and ID₁ of the previous track or the previous sync block are stored.

That is, if head switching signal HD is received from input port 2, buffer 334 outputs the track pair information bits of the previous track ID₀ through an output port 26 to ID comparing circuit 333, and whenever a sync detection signal is received from output port 9 of sync pattern comparing circuit 323 shown in Figure 9, outputs the ID₁ of the previous sync block through an output port 27 to ID comparing circuit 333.

Here, the ID₀ has identical track pair information recorded therein every 2 tracks. The ID₁ indicates a sync block number, and thus it must be incremented by "1" whenever a sync detection signal is detected.

ID comparing circuit 333 compares the track pair information of the ID₀ stored in buffer 334 with the track pair information of the current ID₀ by receiving the ID corrected in ID error corrector 332 and the ID₀ output from buffer 334. That is, it is determined whether the current ID₀ is identical to the ID₀ of the previous track and its increment amount is "1". Then, the current ID₁ is compared with the ID₁ of the previous sync block to determine whether the increment amount is "1", that is, to determine whether there is continuity between both the ID₁s. When there are congruity and continuity between them, an ID comparing signal is output as a "high" signal to pseudo-sync control signal generator 340 through output port 11, and the current ID is stored in buffer 334 through an output port 28.

In the case where the track pair information of the current ID₀ and the previous ID₀ is different or there is no continuity between the current ID₀ and the previous ID₀, the ID comparing signal is output as a "high" signal from ID comparing circuit 333 and the ID of the current sync block is considered to be identical to the ID of the previous sync block. However, in the case where the track pair information of the current ID₀ and the previous ID₀ also is different in the next sync block, or there is no continuity between the current ID₁ and the previous ID₁, the ID comparing signal is output as a "low" signal and the ID of the current sync block is considered to disagree with the ID of the previous sync block.

Meanwhile, it must be checked whether a 2-byte sync for a pre-sync and a post-sync is generated at a 6-byte cycle, and a 2-byte sync for a data sync is generated at a 90-byte cycle. The reason is that a sync must be detected at a correct position to prevent the generation of a sync detection signal despite the generation of the same data as a sync pattern in a data area.

Therefore, when a first sync detection signal for each area is received through output port 9 of sync pattern comparing circuit 323 shown in Figure 9, pseudo-sync control signal generator 340 shown in Figure 7 generates a sync stand-by signal for an area of the next coming sync, and outputs the sync stand-by signal through output port 12 to sync pattern comparing circuit 323 of sync pattern detector 320 shown in Figure 9.

Here, the sync stand-by signal takes different forms depending on the audio, video and subcode areas. For example, in the case of the video area, if a sync detection signal for the first of two pre-sync blocks is detected, a logic "high" sync stand-by signal is generated only during the sync area period of the second pre-sync block. Thereafter, a logic "high" sync stand-by signal is generated only during the sync area period of 149 data sync blocks at a 90-byte cycle, and then, a logic "high" sync stand-by signal is generated only during the sync area period of a post-sync block.

When the sync detection signal for a data sync block is detected from sync pattern detector 320 during the sync stand-by period, and an ID comparing signal output from output port 11 of ID comparing circuit 333 shown in Figure 10 is "high", pseudo-sync control signal generator 340 outputs the sync control signal through output port 13 to demodulator 200 shown in Figure 6, thereby enabling the correct detection of data. Demodulator 200 delays the data reproduced by head 100 during the time for generating the sync control signal output through output port 13 of pseudo-sync control signal generator 340.

On the other hand, even though no sync detection signal is detected during the sync stand-by period, if an ID comparing signal is "high", pseudo-sync control signal generator 340 outputs the sync control signal through output port 13 to demodulator 200. Here, the sync control signal functions as a pseudo-sync control signal. Even though the ID comparing signal is "low", if a sync detection signal is detected, the sync control signal is normally output through output port 13. However, if no sync detection signal is detected and the ID comparing signal is "low", the sync control signal is prevented from being output from demodulator 200 and a sync stand-by signal is not permitted to be output to sync pattern detector 320.

That is, if no sync pattern is detected due to a sync error, a sync control signal (pseudo-sync control signal) is forcibly generated, and if no sync pattern is successively detected, all the sync patterns of data on a corresponding track are detected to thereby detect data.

Further, when the final sync, i.e., a post-sync for a corresponding area is detected, pseudo-sync control signal generator 340 outputs a post-sync detection signal through output port 15 to control signal and area signal generator 313 of run-up pattern detector 310 shown in Figure 8, as described above.

Whenever a sync detection signal for a data sync block is generated after a sync detection signal for a pre-sync block, that is, whenever the sync control signal is output to demodulator 200, a sync and ID area signal is output through output port 14 to data selector 360. Data selector 360 separates a sync and an ID from data output from output port 16 of delay 350, according to the sync and ID area signal, extracts only real data and a parity, and outputs the extracted data and parity through output port 17 to error correction decoder 400.

Even if the present invention is not provided with an ID separator 330 using a detected ID signal for a correct sync detection, there are no operational problems.

As described above, in the embodiment of the present invention described, a sync used for detecting data at a predetermined position is accurately detected and, even if an error is found in the sync, a pseudo-sync control signal is generated, thereby enabling the correct detection of the data at the predetermined position.

## Claims

1. A sync detecting and protecting circuit for use in a reproducing apparatus for reproducing digital data from a recording medium wherein a predetermined plurality of areas for recording said digital data are arranged in each track, each area is constituted of a plurality of sync blocks, a predetermined pre-amble pattern is recorded at the start of each area, different types of areas having a predetermined preamble pattern according to a type of area, said sync detecting and protecting circuit comprising:
first detecting means (310) for detecting a pre-amble pattern of said digital data received from the recording medium;
second detecting means (320) for detecting a sync of said received digital data, comparing said detected sync and a predetermined sync pattern, and outputting a sync detection signal;
**characterised by**:
the first detecting means (310) generating a corresponding area signal indicating the type of area according to the detected preamble pattern;
the second detecting means (320) for generating the predetermined sync pattern according to the area signal output by the first detecting means (310); and
control signal generating means (340) for generating a sync control signal on the basis of said sync detection signal, and generating a pseudo-sync control signal if said detected sync has an error.

2. A sync detecting and protecting circuit as claimed in claim 1, further comprising ID separating means (330) for separating the ID code recorded after said detected sync, comparing said separated ID with the IDs of the previous track and sync block, and outputting an ID comparison signal (11).

3. A sync detecting and protecting circuit as claimed in claim 2, wherein said control signal generating means (340) generates a sync control signal on the basis of said sync detection signal (9) and said ID comparison signal (11).

4. A sync detecting and protecting circuit as claimed in claim 2 or 3, wherein said control signal generating means (340) generates a sync and ID area signal on the basis of said sync detection signal.

5. A sync detecting and protecting circuit as claimed in claim 4, further comprising:
data selecting means (360) for removing the sync and ID of the digital data output through said first detecting means (310) according to said sync and ID area signal, and outputting said sync-and-ID-removed digital data; and
delaying means (350) for delaying the digital data output from said first detecting means (310) by the time for generating said sync and ID area signal in said control signal generating means (340), and outputting said delayed data to said data selecting means (360).

6. A sync detecting and protecting circuit as claimed in claim 2, 3, 4 or 5, wherein said first detecting means (310) comprises:
a pre-amble comparing circuit (311) for comparing a predetermined pre-amble pattern with a first pre-amble of said input digital data in response to a head switching signal indicating the start of a track, and outputting a first comparing signal;
a run-up pattern comparing circuit (312) for comparing a predetermined run-up pattern and the run-up pattern of the digital data output through said pre-amble comparing circuit (311) in response to said first comparing signal, and outputting a second comparing signal; and
an area signal generator (313) for generating a plurality of area signals corresponding to said plurality of areas on the basis of said first and second comparing signals.

7. A sync detecting and protecting circuit as claimed in claim 6, wherein said second detecting means (320) comprises:
a sync pattern generator (322) for generating the sync patterns for a predetermined plurality of areas according to said plurality of area signals; and
a sync pattern comparing circuit (323) for comparing the sync pattern of said input digital data and said generated sync pattern and outputting a sync detection signal.

8. A sync detecting and protecting circuit as claimed in claim 7, wherein said second detecting means (320) further comprises a delay (321) for delaying said input digital data by the time for generating each of said plurality of area signals and outputting said delayed digital data to said sync pattern comparing circuit (323).

9. A sync detecting and protecting circuit as claimed in claim 7 or 8, wherein said ID separating means comprises:
an ID detector (331) for detecting an ID from the digital data output through said sync pattern comparing circuit (323) in response to said sync selecting signal;
a memory (334) for storing an ID indicating the track pair information of a previous track and an ID indicating the number of a previous sync block;
an error corrector (332) for correcting the errors of said detected ID and outputting an error-corrected ID to said memory; and
an ID comparing circuit (333) for comparing said error-corrected ID with said ID indicating the track pair information of the previous track in response to said head switching signal, comparing said current error-corrected ID with said ID of the previous sync block, and outputting an ID comparing signal.

10. A sync detecting and protecting circuit as claimed in claim 9, wherein said control signal generating means (340) outputs a previous sync control signal as a pseudo sync control signal when only said ID comparing signal is detected without said sync detection signal, and prevents the outputting of said sync control signal when said sync - detection signal is not detected successively.

11. A reproducing apparatus of a digital video cassette recorder having a sync detecting and protecting circuit including demodulating means for reproducing and demodulating data recorded in a predetermined plurality of areas on a digital tape having an SD recording format, error correction decoding means for error-correction decoding the data output from said demodulating means, and data expanding means for expanding said error-correction decoded data, said sync detecting and protecting circuit comprising:
run-up pattern detecting means (310) for detecting a run-up pattern of the digital data output from said demodulating means; and
sync pattern detecting means (320) for detecting a sync from said data demodulated in said demodulating means, comparing said detected sync with a predetermined sync pattern, and outputting a sync detection signal;
**characterised by**:
the run-up pattern detecting means (310) generating a corresponding area signal according to the detected run-up pattern;
the sync pattern generating means (320) generating the predetermined sync pattern according to the area signal;
ID separating means (330) for separating an ID following said sync detected in said sync pattern detecting means (320), comparing said separated ID with the IDs of the previous track and sync block, and outputting an ID comparing signal;
pseudo-sync control signal generating means (340) for outputting a sync control signal on the basis of said sync detection signal and said ID comparing signal, generating a pseudo-sync control signal if an error takes place in said detected sync, and generating a sync and ID area signal on the basis of said sync detection signal; and
data selecting means (360) for removing the sync and ID of the digital data output through said run-up pattern detecting means (310) according to said sync and ID area signal, and outputting said sync-and-ID-removed data to said error correction decoding means.

12. A reproducing apparatus as claimed in claim 11, further comprising delaying means (350) for delaying the data output from said run-up pattern detecting means (310) by the time for generating said sync and ID area signal, and outputting said delayed data to said data selecting means (360).

13. A reproducing apparatus as claimed in claim 11 or 12, wherein said run-up pattern detecting means (310) comprises:
a pre-amble comparing circuit (311) for comparing a predetermined pre-amble pattern with a first pre-amble of the digital data output from said demodulating means in response to a head switching signal indicating the start of a track, and outputting a first comparing signal;
a run-up pattern comparing circuit (312) for comparing a predetermined run-up pattern with a run-up of the digital data output from said pre-amble comparing circuit (311) in response to said first comparing signal, and outputting a second comparing signal; and
a control signal and area signal generator (313) for generating a first enable signal for enabling said preamble comparing circuit (311) in response to said head switching signal, generating a second enable signal for enabling said run-up pattern comparing circuit (312) in response to said first enable signal, and generating a plurality of area signals corresponding to said plurality of areas.

14. A reproducing apparatus as claimed in claim 13, wherein said sync pattern detecting means (320) comprises:
a sync pattern generator (322) for generating the sync patterns of a predetermined plurality of areas according to said plurality of area signals; and
a sync pattern comparing circuit (323) for comparing the sync of the digital data output from said demodulating means with said generated sync pattern, and outputting a sync detection signal.

15. A reproducing apparatus as claimed in claim 14, wherein said sync pattern detecting means further comprises a delay (321) for delaying the digital data output from said demodulating means by the time for generating each of said plurality of area signals.

16. A reproducing apparatus as claimed in claim 14 or 15, wherein said ID separating means (330) comprises:
an ID detector (331) for detecting an ID from the digital data output through said sync pattern comparing circuit (323);
a memory (334) for storing an ID indicating the track pair information of the previous track and an ID indicating the number of the previous sync block;
an ID error corrector (332) for correcting the errors of said detected ID and outputting an error-corrected ID to said memory; and
an ID comparing circuit (333) for comparing said ID indicating the track pair information of the previous track with said error-corrected ID in response to said head switching signal, comparing said Id of the previous sync block with said error-corrected ID in response to said sync detection signal, and outputting an ID comparing signal.

17. A reproducing apparatus as claimed in claim 16, wherein said pseudo-sync control signal generating means (340) outputs the previous sync control signal as a pseudo-sync control signal when only said ID comparing signal is detected without said sync detection signal, and prevents the outputting of said sync detection signal when said sync detection signal is not detected successively.

18. A sync detecting and protecting method for use in a reproducing apparatus for reproducing digital data from a recording medium in which a predetermined plurality of areas for recording said digital data are arranged in each track, each area is constituted of a plurality of sync blocks, a predetermined pre-amble pattern is recorded at the start of each area, different types of areas having a predetermined preamble pattern according to the type of area said sync detecting and protecting method comprising the steps of:
(a) detecting a pre-amble pattern of said digital data received from said recording medium;
(b) detecting a sync of said received digital data, comparing said detected sync with a predetermined sync pattern, and generating a sync detection signal;
and **characterised by**:
the generation of a corresponding area signal indicating the type of area according to the pre-amble pattern detected in step (a);
the generation of the predetermined sync signal of step (b) according to the area signal;
and the step of:
(c) generating a sync control signal on the basis of said sync detection signal, and generating a pseudo-sync control signal if an error is found in said detected sync.

19. A sync detecting and protecting method as claimed in claim 18, further comprising the step of separating the ID code following said sync detected in step (b), comparing said separated ID with the IDs of the previous track and sync block, and generating an ID comparison signal.

20. A sync detecting and protecting method as claimed in claim 19, wherein a sync control signal is generated on the basis of said sync detection signal and said ID comparison signal, in said step (c).

## Patentansprüche

1. Sync-Erfassungs-und-Schutz-Schaltung zum Einsatz in einer Wiedergabevorrichtung zum Wiedergeben digitaler Daten von einem Aufzeichnungsmedium, wobei eine vorgegebene Vielzahl von Bereichen zum Aufzeichnen der digitalen Daten in jeder Spur angeordnet sind, jeder Bereich von einer Vielzahl von Sync-Blöcken gebildet wird, ein vorgegebenes Präambel-Muster am Anfang jedes Bereiches aufgezeichnet ist, verschiedene Typen von Bereichen gemäß einem Typ vom Bereich ein vorgegebenes Präambel-Muster haben und die Sync-Erfassungs-und-Schutz-Schaltung umfasst:
eine erste Erfassungseinrichtung (310) zum Erfassen eines Präambel-Musters der von dem Aufzeichnungsmedium empfangenen digitalen Daten;
eine zweite Erfassungseinrichtung (320) zum Erfassen eines Sync der empfangenen digitalen Daten, zum Vergleichen des erfassten Sync und eines vorgegebenen Synch-Musters und zum Ausgeben eines Sync-Erfassungssignals;
**gekennzeichnet durch**
die erste Erfassungseinrichtung (310) zum Erzeugen eines entsprechenden Bereichssignals, das den Typ des Bereichs gemäß dem erfassten Präambel-Muster anzeigt;
die zweite Erfassungseinrichtung (320) zum Erzeugen des vorgegebenen Sync-Musters gemäß dem **durch** die erste Erfassungseinrichtung (310) ausgegebenen Bereichssignal; und
eine Steuersignal-Erzeugungseinrichtung (340) zum Erzeugen eines Sync-Steuersignals auf Basis des Sync-Erfassungssignals und eines Pseudo-Sync-Steuersignals, wenn das erfasste Sync einen Fehler aufweist.

2. Sync-Erfassungs-und-Schutz-Schaltung nach Anspruch 1, die des Weiteren eine ID-Abtrenneinrichtung (330) umfasst, die den nach dem erfassten Sync aufgezeichneten ID-Code abtrennt, die abgetrennte ID mit den ID der vorangegangenen Spur und des Sync-Blocks vergleicht und ein ID-Vergleichssignal (11) ausgibt.

3. Sync-Erfassungs-und-Schutz-Schaltung nach Anspruch 2, wobei die Steuersignal-Erzeugungseinrichtung (340) ein Sync-Steuersignal auf Basis des Sync-Erfassungssignals (9) und des ID-Vergleichssignals (11) erzeugt.

4. Sync-Erfassungs-und-Schutz-Schaltung nach Anspruch 2 oder 3, wobei die Steuersignal-Erzeugungseinrichtung (340) ein Sync und ein ID-Bereichssignal auf Basis des Sync-Erfassungssignals erzeugt.

5. Sync-Erfassungs-und-Schutz-Schaltung nach Anspruch 4, die des Weiteren umfasst:
eine Datenauswähleinrichtung (360) zum Entfernen des Sync und der ID der digitalen Daten, die über die erste Erfassungseinrichtung (310) ausgegeben werden, gemäß dem Sync und dem ID-Bereichssignal sowie zum Ausgeben der digitalen Daten, aus denen Sync und ID entfernt worden sind; und;
eine Verzögerungseinrichtung (350) zum Verzögern der von der ersten Erfassungseinrichtung (310) ausgegebenen digitalen Daten um die Zeit zum Erzeugen des Sync und des ID-Bereichssignals in der Steuersignal-Erzeugungseinrichtung (340) und zum Ausgeben der verzögerten Daten an die Daten-Auswähleinrichtung (360).

6. Sync-Erfassungs-und-Schutz-Schaltung nach Anspruch 2, 3, 4 oder 5, wobei die erste Erfassungseinrichtung (310) umfasst:
eine Präambel-Vergleichsschaltung (311) zum Vergleichen eines vorgegebenen Präambel-Musters mit einer ersten Präambel des eingegebenen digitalen Signals in Reaktion auf ein Kopf-Umschaltsignal, das den Anfang einer Spur anzeigt, und zum Ausgeben eines ersten Vergleichssignals;
eine Hochfahrmuster-Vergleichsschaltung (312) zum Vergleichen eines vorgegebenen Hochfahrmusters und des Hochfahrmusters der über die Präambel-Vergleichsschaltung (311) ausgegebenen digitalen Daten in Reaktion auf das erste Vergleichssignal sowie zum Ausgeben eines zweiten Vergleichssignals; und
eine Bereichssignals-Erzeugungseinrichtung (313) zum Erzeugen einer Vielzahl von Bereichssignalen, die der Vielzahl von Bereichen entsprechen, auf Basis des ersten und des zweiten Vergleichssignals.

7. Sync-Erfassungs-und-Schutz-Schaltung nach Anspruch 6, wobei die zweite Erfassungseinrichtung (320) umfasst:
eine Sync-Muster-Erzeugungseinrichtung (322) zum Erzeugen der Sync-Muster für eine vorgegebene Vielzahl von Bereichen gemäß der Vielzahl von Bereichssignalen; und
eine Sync-Muster-Vergleichsschaltung (322) zum Vergleichen des Sync-Musters der eingegebenen digitalen Daten und des erzeugten Sync-Musters sowie zum Ausgeben eines Sync-Erfassungssignals.

8. Sync-Erfassungs-und-Schutz-Schaltung nach Anspruch 7, wobei die zweite Erfassungseinrichtung (320) des Weiteren ein Verzögerungsglied (321) zum Verzögern der eingegebenen digitalen Daten um die Zeit zum Erzeugen jedes der Vielzahl von Bereichssignalen und zum Ausgeben der verzögerten digitalen Daten an die Sync-Muster-Vergleichsschaltung (323) umfasst.

9. Sync-Erfassungs-und-Schutz-Schaltung nach Anspruch 7 oder 8, wobei die ID-Abtrenneinrichtung umfasst:
eine ID-Erfassungseinrichtung (331) zum Erfassen einer ID aus den über die Sync-Muster-Vergleichsschaltung (323) ausgegebenen digitalen Daten in Reaktion auf das Sync-Auswählsignal;
einen Speicher (334) zum Speichern einer ID, die die Spurpaar-Informationen einer vorangegangenen Spur anzeigen, und einer ID, die die Nummer eines vorangegangenen Sync-Blocks anzeigt;
eine Fehlerkorrektureinrichtung (332) zum Korrigieren der Fehler der erfassten ID und zum Ausgeben einer fehlerkorrigierten ID an den Speicher; und
eine ID-Vergleichsschaltung (333) zum Vergleichen der fehlerkorrigierten ID mit der ID, die die Spurpaar-Informationen der vorangegangenen Spur in Reaktion auf das Kopf-Umschaltsignal anzeigt, zum Vergleich der aktuellen fehlerkorrigierten ID mit der ID des vorangegangenen Sync-Blocks und zum Ausgeben eines ID-Vergleichssignals.

10. Sync-Erfassungs-und-Schutz-Schaltung nach Anspruch 9, wobei die Steuersignal-Erzeugungseinrichtung (340) ein vorangegangenes Sync-Steuersignal als ein Pseudo-Sync-Steuersignal ausgibt, wenn nur das ID-Vergleichssignal ohne das Sync-Erfassungssignal erfasst wird, und das Ausgeben des Sync-Steuersignals verhindert, wenn das Sync-Erfassungssignal anschließend nicht erfasst wird.

11. Wiedergabevorrichtung eines digitalen Videokassettenrekorders mit einer Sync-Erfassungs-und-Schutz-Schaltung, die eine Demoduliereinrichtung zum Wiedergeben und Demodulieren von Daten, die in einer vorgegebenen Vielzahl von Bereichen auf einem digitalen Band mit einem SD-Aufzeichnungsformat aufgezeichnet sind, eine Fehlerkorrektur-Decodiereinrichtung zum Fehlerkorrektur-Decodieren der von der Demoduliereinrichtung ausgegebenen Daten und eine Daten-Expansionseinrichtung zum Expandieren der fehlerkorrigierten decodierten Daten enthält, wobei die Sync-Erfassungs-und-Schutz-Schaltung umfasst:
eine Hochfahrmuster-Erfassungseinrichtung (310) zum Erfassen eines Hochfahrmusters der von der Demoduliereinrichtung ausgegebenen digitalen Daten; und
eine Sync-Muster-Erfassungseinrichtung (320) zum Erfassen eines Sync aus den in der Demoduliereinrichtung demodulierten Daten, zum Vergleichen des erfassten Sync mit einem vorgegebenen Sync-Muster und zum Ausgeben eines Sync-Erfassungssignals;
**gekennzeichnet**
**dadurch, dass** die Hochfahrmuster-Erfassungseinrichtung (310) ein entsprechendes Bereichssignal gemäß dem erfassten Hochfahrmuster erzeugt;
die Sync-Muster-Erzeugungseinrichtung (320) das vorgegebene Sync-Muster gemäß dem Bereichssignal erzeugt;
durch eine ID-Abtrenneinrichtung (330) zum Abtrennen einer ID, die auf das in der Sync-Muster-Erfassungseinrichtung (320) erfasste Sync folgt, zum Vergleichen der abgetrennten ID mit den ID der vorangegangenen Spur und dem Sync-Block sowie zum Ausgeben eines ID-Vergleichssignals;
eine Pseudo-Sync-Steuersignal-Erzeugungseinrichtung (340) zum Ausgeben eines Sync-Steuersignals auf Basis des Sync-Erfassungssignals und des ID-Vergleichssignals, zum Erzeugen eines Pseudo-Sync-Steuersignals, wenn ein Fehler in dem erfassten Sync auftritt, sowie zum Erzeugen eines Sync und eines ID-Bereichssignals auf Basis des Sync-Erfassungssignals; und
eine Datenauswähleinrichtung (360) zum Entfernen des Sync und der ID der digitalen Daten, die über die Hochfahrmuster-Erfassungseinrichtung (310) ausgegeben werden, gemäß dem Sync und dem ID-Bereichssignal sowie zum Ausgeben der Daten, aus denen Sync und ID entfernt worden sind, an die Fehlerkorrektur-Decodiereinrichtung.

12. Wiedergabevorrichtung nach Anspruch 11, die des Weiteren eine Verzögerungseinrichtung (350) zum Verzögern der von der Hochfahrmuster-Erfassungseinrichtung (310) ausgegebenen Daten um die Zeit zum Erzeugen des Sync und des ID-Bereichssignals sowie zum Ausgeben der verzögerten Daten an die Datenauswähleinrichtung (360) umfasst.

13. Wiedergabevorrichtung nach Anspruch 11 oder 12, wobei die Hochfahrmuster-Erfassungseinrichtung (310) umfasst:
eine Präambel-Vergleichsschaltung (311) zum Vergleichen eines vorgegebenen Präambel-Musters mit einer ersten Präambel der von der Demoduliereinrichtung ausgegebenen digitalen Daten in Reaktion auf ein Kopf-Umschaltsignal, das den Anfang einer Spur anzeigt, und zum Ausgeben eines ersten Vergleichssignals;
eine Hochfahrmuster-Vergleichsschaltung (312) zum Vergleichen eines vorgegebenen Hochfahrmusters mit einem Hochfahrmuster der von der Präambel-Vergleichsschaltung (311) ausgegebenen digitalen Daten in Reaktion auf das erste Vergleichssignal und zum Ausgeben eines zweiten Vergleichssignals; und
eine Steuersignal-und-Bereichssignal-Erzeugungseinrichtung (313) zum Erzeugen eines ersten Aktivierungssignals zum Aktivieren der Präambel-Vergleichsschaltung (311) in Reaktion auf das Kopfumschalt-Signal, zum Erzeugen eines zweiten Aktivierungssignals zum Aktivieren der Hochfahrmuster-Vergleichsschaltung (312) in Reaktion auf das erste Aktivierungssignal und zum Erzeugen einer Vielzahl von Bereichssignalen, die der Vielzahl von Bereichen entsprechen.

14. Wiedergabevorrichtung nach Anspruch 13, wobei die Sync-Muster-Erfassungseinrichtung (320) umfasst:
eine Sync-Muster-Erzeugungseinrichtung (322) zum Erzeugen der Sync-Muster einer vorgegebenen Vielzahl von Bereichen gemäß der Vielzahl von Bereichssignalen; und
eine Sync-Muster-Vergleichsschaltung (323) zum Vergleichen des Sync der von der Demoduliereinrichtung ausgegebenen digitalen Daten mit dem erzeugten Sync-Muster und zum Ausgeben eines Sync-Erfassungssignals.

15. Wiedergabevorrichtung nach Anspruch 14, wobei die Sync-Muster-Erfassungseinrichtung des Weiteren ein Verzögerungsglied (321) zum Verzögern der von der Demoduliereinrichtung ausgegebenen digitalen Daten um die Zeit zum Erzeugen jedes der Vielzahl von Bereichssignalen umfasst.

16. Wiedergabevorrichtung nach Anspruch 14 oder 15, wobei die ID-Abtrenneinrichtung (330) umfasst:
eine ID-Erfassungseinrichtung (331) zum Erfassen einer ID aus den über die Sync-Muster-Vergleichsschaltung (323) ausgegebenen digitalen Daten;
einen Speicher (334) zum Speichern einer ID, die die Spurpaar-Informationen der vorangegangenen Spur und eine ID speichert, die die Nummer des vorangegangenen Sync-Blocks anzeigt;
eine ID-Fehler-Korrektureinrichtung (332) zum Korrigieren der Fehler der erfassten ID und zum Ausgeben einer fehlerkorrigierten ID an den Speicher; und
eine ID-Vergleichsschaltung (333) zum Vergleichen der ID, die die Spurpaar-Informationen der vorangegangenen Spur anzeigt, mit der fehlerkorrigierten ID in Reaktion auf das Kopfumschaltsignal, zum Vergleichen der ID des vorangegangenen Sync-Blocks mit der fehlerkorrigierten ID in Reaktion auf das Sync-Erfassungssignal und zum Ausgeben eines ID-Vergleichssignals.

17. Wiedergabevorrichtung nach Anspruch 16, wobei die Pseudo-Sync-Steuersignal-Erzeugungseinrichtung (340) das vorangegangene Sync-Steuersignal als ein Pseudo-Sync-Steuersignal ausgibt, wenn nur das ID-Vergleichssignal ohne das Sync-Erfassungssignal erfasst wird, und die Ausgabe-Sync-Erfassungssignals verhindert, wenn das Sync-Erfassungssignal anschließend nicht erfasst wird.

18. Sync-Erfassungs-und-Schutz-Verfahren zum Einsatz in einer Wiedergabevorrichtung zum Wiedergeben digitaler Daten von einem Aufzeichnungsmedium, in dem eine Vielzahl von Bereichen zum Aufzeichnen der digitalen Daten in jeder Spur angeordnet sind, wobei jeder Bereich von einer Vielzahl von Sync-Blöcken gebildet wird, ein vorgegebenes Präambel-Muster im Anfang jedes Bereiches aufgezeichnet ist, verschiedene Typen von Bereichen gemäß dem Typ von Bereich ein vorgegebenes Präambel-Muster haben, und das Sync-Erfassungs-und-Schutz-Verfahren die folgenden Schritte umfasst:
(a) Erfassen eines Präambel-Musters der von dem Aufzeichnungsmedium empfangenen digitalen Daten;
(b) Erfassen eines Sync der empfangenen digitalen Daten, Vergleichen des erfassten Sync mit einem vorgegebenen Sync-Muster und Erzeugen eines Sync-Erfassungssignals;
und **gekennzeichnet durch**:
die Erzeugung eines entsprechenden Bereichssignals, das den Typ von Bereich anzeigt, gemäß dem in Schritt (a) erfassten Präambel-Muster;
die Erzeugung des vorgegebenen Sync-Signals von Schritt (b) gemäß dem Bereichssignal;
und den Schritt des
(c) Erzeugens eines Sync-Steuersignals auf Basis des Sync-Erfassungssignals und des Erzeugens eines Pseudo-Sync-Steuersignals, wenn in dem erfassten Sync ein Fehler gefunden wird.

19. Sync-Erfassungs-und-Schutz-Verfahren nach Anspruch 18, das des Weiteren den Schritt des Abtrennens des ID-Codes umfasst, der auf den in Schritt (b) erfassten Sync folgt, des Vergleichens des abgetrennten ID mit den ID der vorangegangenen Spur und des Sync-Blocks sowie des Erzeugens eines ID-Vergleichssignals umfasst.

20. Sync-Erfassungs-und-Schutz-Verfahren nach Anspruch 19, wobei ein Sync-Steuersignal auf Basis des Sync-Erfassungssignals und des ID-Vergleichssignals in dem Schritt (c) erzeugt wird.

## Revendications

1. Circuit de détection et de protection de synchronisation destiné à une utilisation dans un dispositif de reproduction pour reproduire des données numériques à partir d'un support d'enregistrement, dans lequel une pluralité prédéterminée de zones pour enregistrer lesdites données numériques sont disposées dans chaque piste, chaque zone est constituée d'une pluralité de blocs de synchronisation, un motif de synchroniseur initial prédéterminé est enregistré au début de chaque zone, différents types de zones ayant un motif de synchroniseur initial prédéterminé selon un type de zone, ledit circuit de détection et de protection de synchronisation comprenant :
un premier moyen de détection (310) pour détecter un motif de synchroniseur initial desdites données numériques reçues à partir du support d'enregistrement ;
un second moyen de détection (320) pour détecter une synchronisation desdites données numériques reçues, comparer ladite synchronisation détectée avec un motif de synchronisation prédéterminé et délivrer en sortie un signal de détection de synchronisation ;
**caractérisé par** :
le premier moyen de détection (310) générant un signal de zone correspondant indiquant le type de zone selon le motif de synchroniseur initial détecté ;
le second moyen de détection (320) générant le motif de synchronisation prédéterminé selon le signal de zone délivré en sortie par le premier moyen de détection (310) ; et
un moyen de génération de signal de commande (340) générant un signal de commande de synchronisation sur la base dudit signal de détection de synchronisation, et générant un signal de commande de pseudo-synchronisation si ladite synchronisation détectée présente une erreur.

2. Circuit de détection et de protection de synchronisation selon la revendication 1, comprenant en outre un moyen de séparation d'identifiant (330) pour séparer le code d'identification enregistré après ladite synchronisation détectée, comparer ledit identifiant séparé avec les identifiants de la piste précédente et le bloc de synchronisation, et délivrer en sortie un signal de comparaison d'identifiant (11).

3. Circuit de détection et de protection de synchronisation selon la revendication 2, dans lequel ledit moyen de génération de signal de commande (340) génère un signal de commande de synchronisation sur la base dudit signal de détection de synchronisation (9) et dudit signal de comparaison d'identifiant (11).

4. Circuit de détection et de protection de synchronisation selon la revendication 2 ou la revendication 3, dans lequel ledit moyen de génération de signal de commande (340) génère un signal de zone de synchronisation et d'identifiant sur la base dudit signal de détection de synchronisation.

5. Circuit de détection et de protection de synchronisation selon la revendication 4, comprenant en outre :
un moyen de sélection de données (360) pour retirer la synchronisation et l'identifiant des données numériques délivrées en sortie par ledit premier moyen de détection (310) selon ledit signal de zone de synchronisation et d'identifiant, et pour délivrer en sortie lesdites données numériques dont sont retirés la synchronisation et l'identifiant ;
un moyen de temporisation (350) pour retarder les données numériques délivrées en sortie par le premier moyen de détection (310) de la durée de génération dudit signal de zone de synchronisation et d'identifiant dans ledit moyen de génération de signal de commande (340), et délivrer en sortie lesdites données retardées vers ledit moyen de sélection de données (360).

6. Circuit de détection et de protection de synchronisation selon la revendication 2, 3, 4 ou 5, dans lequel ledit premier moyen de détection (310) comprend :
un circuit de comparaison de synchroniseur initial (311) pour comparer un motif de synchroniseur initial prédéterminé avec un premier synchroniseur initial desdites données numériques d'entrée en réponse à un signal de commutation de tête indiquant le début d'une piste, et délivrer en sortie un premier signal de comparaison ;
un circuit de comparaison de motif de garde (312) pour comparer un motif de garde prédéterminé et le motif de garde des données numériques délivrées en sortie par ledit circuit de comparaison de synchroniseur initial (311) en réponse audit premier signal de comparaison, et délivrer en sortie un second signal de comparaison ; et
un générateur de signal de zone (313) pour générer une pluralité de signaux de zone correspondant à ladite pluralité de zones sur la base desdits premier et second signaux de comparaison.

7. Circuit de détection et de protection de synchronisation selon la revendication 6, dans lequel ledit second moyen de détection (320) comprend :
un générateur de motif de synchronisation (322) pour générer les motifs de synchronisation pour une pluralité prédéterminée de zones selon ladite pluralité de signaux de zone ; et
un circuit de comparaison de motif de synchronisation (323) pour comparer le motif de synchronisation desdites données numériques d'entrée et dudit motif de synchronisation généré et délivrer en sortie un signal de détection de synchronisation.

8. Circuit de détection et de protection de synchronisation selon la revendication 7, dans lequel ledit second moyen de détection (320) comprend en outre un temporisateur (321) pour retarder lesdites données numériques d'entrée de la durée de génération de chacun de ladite pluralité de signaux de zone et délivrer en sortie lesdites données retardées vers ledit circuit de comparaison de motif de synchronisation (323).

9. Circuit de détection et de protection de synchronisation selon la revendication 7 ou la revendication 8, dans lequel ledit moyen de séparation d'identifiant comprend :
un détecteur d'identifiant (331) pour détecter un identifiant à partir des données numériques délivrées en sortie par ledit circuit de comparaison de motif de synchronisation (323) en réponse audit signal de sélection de synchronisation ;
une mémoire (334) pour mémoriser un identifiant indiquant les informations de paire de pistes d'une piste précédente et un identifiant indiquant le numéro d'un bloc de synchronisation précédent ;
un correcteur d'erreur (332) pour corriger les erreurs dudit identifiant sélectionné et délivrer en sortie un identifiant dont les erreurs sont corrigées vers ladite mémoire ; et
un circuit de comparaison d'identifiant (333) pour comparer ledit identifiant dont les erreurs sont corrigées avec ledit identifiant indiquant les informations de paire de pistes de la piste précédente en réponse audit signal de commutation de tête, comparer ledit identifiant courant dont les erreurs sont corrigées avec ledit identifiant du bloc de synchronisation précédent et délivrer en sortie un signal de comparaison d'identifiant.

10. Circuit de détection et de protection de synchronisation selon la revendication 9, dans lequel ledit moyen de génération de signal de commande (340) délivre en sortie un signal de commande de synchronisation précédent comme signal de commande de pseudo-synchronisation lorsque uniquement ledit signal de comparaison d'identifiant est détecté sans ledit signal de détection de synchronisation, et empêche la sortie dudit signal de commande de synchronisation lorsque ledit signal de détection de synchronisation n'est pas successivement détecté.

11. Dispositif de reproduction d'un magnétoscope à cassette numérique ayant un circuit de détection et de protection de synchronisation comprenant un moyen de démodulation pour reproduire et démoduler des données enregistrées dans une pluralité prédéterminée de zones sur une bande magnétique ayant un format d'enregistrement SD, un moyen de décodage de correction d'erreur pour décoder avec correction d'erreur la sortie de données dudit moyen de démodulation et un moyen d'expansion de données pour expanser lesdites données décodées avec correction d'erreur, ledit circuit de détection et de protection de synchronisation comprenant :
un moyen de détection de motif de garde (310) pour détecter un motif de garde des données numériques délivrées en sortie depuis ledit moyen de démodulation ; et
un moyen de détection de motif de synchronisation (320) pour détecter une synchronisation à partir desdites données démodulées dans ledit moyen de démodulation, comparer ladite synchronisation détectée avec un motif de synchronisation prédéterminé et délivrer en sortie un signal de détection de synchronisation ;
**caractérisé par** :
le moyen de détection de motif de garde (310) générant un signal de zone correspondant selon le motif de garde détecté ;
le moyen de génération de motif de synchronisation (320) générant le motif de synchronisation prédéterminé selon le signal de zone ;
un moyen de séparation d'identifiant (330) pour séparer un identifiant suivant ladite synchronisation détectée dans ledit moyen de détection de motif de synchronisation (320), comparer ledit identifiant séparé avec les identifiants de la piste et du bloc de synchronisation précédents, et délivrer en sortie un signal de comparaison d'identifiant ;
un moyen de génération de signal de commande de pseudo-synchronisation (340) pour délivrer en sortie un signal de commande de synchronisation sur la base dudit signal de détection de synchronisation et dudit signal de comparaison d'identifiant, générer un signal de commande de pseudo-synchronisation si une erreur se produit dans ladite synchronisation détectée, et générer un signal de synchronisation et de zone d'identifiant sur la base dudit signal de détection de synchronisation ; et
un moyen de sélection de données (360) pour retirer la synchronisation et l'identifiant des données numériques délivrées en sortie par ledit moyen de détection de motif de garde (310) selon ledit signal de zone de synchronisation et d'identifiant, et pour délivrer en sortie lesdites données numériques dont sont retirés la synchronisation et l'identifiant vers ledit moyen de décodage de correction d'erreur.

12. Dispositif de reproduction, selon la revendication 11, comprenant en outre un moyen de temporisation (350) pour retarder les données numériques délivrées en sortie par ledit moyen de détection de motif de garde (310) de la durée de génération dudit signal de zone de synchronisation et d'identifiant, et délivrer en sortie lesdites données retardées vers ledit moyen de sélection de données (360).

13. Dispositif de reproduction, selon la revendication 11 ou la revendication 12, dans lequel ledit moyen de détection de motif de garde (310) comprend :
un circuit de comparaison de synchroniseur initial (311) pour comparer un motif de synchroniseur initial prédéterminé avec un premier synchroniseur initial des données numériques délivrées en sortie par ledit moyen de démodulation en réponse à un signal de commutation de tête indiquant le début d'une piste, et délivrer en sortie un premier signal de comparaison ;
un circuit de comparaison de motif de garde (312) pour comparer un motif de garde prédéterminé avec une garde de la sortie de données numériques dudit circuit de comparaison de synchronisateur initial (311) en réponse audit premier signal de comparaison, et délivrer en sortie un second signal de comparaison ; et
un générateur de signal de commande et de signal de zone (313) pour générer un premier signal d'activation pour activer ledit circuit de comparaison de synchroniseur initial (311) en réponse audit signal de commutation de tête, générer un second signal d'activation pour activer ledit circuit de comparaison de motif de garde (312) en réponse au dit premier signal d'activation, et générer une pluralité de signaux de zone correspondant à ladite pluralité de zones.

14. Dispositif de reproduction, selon la revendication 13, dans lequel ledit moyen de détection de motif de synchronisation (320) comprend :
un générateur de motif de synchronisation (322) pour générer les motifs de synchronisation d'une pluralité prédéterminée de zones selon ladite pluralité de signaux de zone ; et
un circuit de comparaison de motif de synchronisation (323) pour comparer la synchronisation de la sortie de données numériques dudit moyen de démodulation avec ledit motif de synchronisation généré, et délivrer en sortie un signal de détection de synchronisation.

15. Dispositif de reproduction selon la revendication 14, dans lequel ledit moyen de détection de motif de synchronisation comprend en outre un temporisateur (321) pour retarder les données numériques délivrées en sortie depuis ledit moyen de démodulation de la durée de génération de chacun de ladite pluralité de signaux de zone.

16. Dispositif de reproduction selon la revendication 14 ou la revendication 15, dans lequel ledit moyen de séparation d'identifiant (330) comprend :
un détecteur d'identifiant (331) pour détecter un identifiant à partir des données numériques délivrées en sortie par ledit circuit de comparaison de motif de synchronisation (323) ;
une mémoire (334) pour mémoriser un identifiant indiquant les informations de paire de pistes de la piste précédente et un identifiant indiquant le numéro du bloc de synchronisation précédent ;
un correcteur d'erreur d'identifiant (332) pour corriger les erreurs dudit identifiant sélectionné et délivrer en sortie un identifiant dont les erreurs sont corrigées vers ladite mémoire ; et
un circuit de comparaison d'identifiant (333) pour comparer ledit identifiant indiquant les informations de paire de pistes de la piste précédente avec ledit identifiant dont les erreurs sont corrigées en réponse audit signal de commutation de tête, comparer ledit identifiant du bloc de synchronisation précédent avec ledit identifiant dont les erreurs sont corrigées en réponse audit signal de détection de synchronisation, et délivrer en sortie un signal de comparaison d'identifiant.

17. Dispositif de reproduction selon la revendication 16, dans lequel ledit moyen de génération de signal de commande de pseudo-synchronisation (340) délivre en sortie le signal de commande de synchronisation précédent comme signal de commande de pseudo-synchronisation lorsque uniquement ledit signal de comparaison d'identifiant est détecté sans ledit signal de détection de synchronisation, et empêche la sortie dudit signal de détection de synchronisation lorsque ledit signal de détection de synchronisation n'est pas successivement détecté.

18. Procédé de détection et de protection de synchronisation destiné à une utilisation dans un dispositif de reproduction pour reproduire des données numériques à partir d'un support d'enregistrement, dans lequel une pluralité prédéterminée de zones pour enregistrer lesdites données numériques sont disposées dans chaque piste, chaque zone est constituée d'une pluralité de blocs de synchronisation, un motif de synchroniseur initial prédéterminé est enregistré au début de chaque zone, différents types de zones ayant un motif de synchroniseur initial prédéterminé selon le type de zone, ledit procédé de détection et de protection de synchronisation comprenant les étapes consistant à :
(a) détecter un motif de synchroniseur initial desdites données numériques reçues à partir dudit support d'enregistrement ;
(b) détecter une synchronisation desdites données numériques reçues, comparer ladite synchronisation détectée avec un motif de synchronisation prédéterminé et générer un signal de détection de synchronisation ;
et **caractérisé par** :
la génération d'un signal de zone correspondant indiquant le type de zone selon le motif de synchroniseur initial détecté à l'étape (a) ;
la génération du signal de synchronisation prédéterminé de l'étape (b) selon le signal de zone ;
et l'étape consistant à :
(c) générer un signal de commande de synchronisation sur la base dudit signal de détection de synchronisation, et générer un signal de commande de pseudo-synchronisation si une erreur est trouvée dans ladite synchronisation détectée.

19. Procédé de détection et de protection de synchronisation selon la revendication 18, comprenant en outre l'étape consistant à séparer le code d'identifiant suivant ladite synchronisation détectée à l'étape (b), à comparer ledit identifiant séparé avec les identifiants de la piste précédente et le bloc de synchronisation, et à générer un signal de comparaison d'identifiant.

20. Procédé de détection et de protection de synchronisation selon la revendication 19, dans lequel un signal de commande de synchronisation est généré sur la base dudit signal de détection de synchronisation et dudit signal de comparaison d'identifiant à ladite étape (c).
